(19) Europäisches Patentamt
European Patent Office
Office européen des brevets

(11) **EP 2 613 230 A2**

(12) **EUROPEAN PATENT APPLICATION**
published in accordance with Art. 153(4) EPC

(43) Date of publication:
**10.07.2013 Bulletin 2013/28**

(51) Int Cl.:
**G06F 3/03** (2006.01)     **G06F 3/041** (2006.01)

(21) Application number: **11822053.2**

(22) Date of filing: **05.08.2011**

(86) International application number:
**PCT/KR2011/005747**

(87) International publication number:
**WO 2012/030078 (08.03.2012 Gazette 2012/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.07.2011 KR 20110065618**
**31.08.2010 KR 20100084567**

(71) Applicant: **Eumplus Co., Ltd**
**Seoul 137-904 (KR)**

(72) Inventors:
• **PARK, Chul**
**Seongnam-si**
**Gyeonggi-do 463-752 (KR)**

• **JO, Koan Hyoung**
**Seongnam-si**
**Gyeonggi-do 463-400 (KR)**
• **BAE, In Ho**
**Seoul 130-020 (KR)**
• **PARK, Byeong Jin**
**Seoul 132-040 (KR)**

(74) Representative: **Colombo, Michel et al**
**Brevinnov**
**310 avenue Berthelot**
**69008 Lyon (FR)**

(54) **DEVICE AND METHOD FOR DETECTING MOVEMENT USING PROXIMITY SENSOR**

(57)     There is disclosed a movement sensing device configured to detect movement of an object on a touch region three or more proximity sensors arranged on one surface adjacent to the touch region independently and two-dimensionally, to measure electrical scalars corresponding to distances with the object on the touch region, respectively; and a control unit configured to calculate a vector of a second touch point relatively changed with respect to a first touch point based on a first electrical scalar and a second electrical scalar measured at a predetermined time difference, wherein a relative moving signal with respect to a reference point is generated by calculating the movement of the object as the vector.

FIG. 3

**Description**

**BACKGROUND**

**Field**

Embodiments of the invention relate to a movement sensing device and a method of sensing movement, more particularly, to a movement sensing device that computes movement of an object as a relative vector with respect to a reverence point, using a proximity sensor, to generate a moving signal, and a method of sensing movement.

**Background**

Generally, personal hand-carry terminals adapt a user interface using a keypad and such personal hand-carry terminals include mobile terminals, personal digital assistants and so on. In detail, a conventional personal hand-carry terminal is provided with a keypad including a plurality of buttons to input numbers and characters. A user can input telephone numbers or texts via such buttons of the keypad to the personal hand-carry terminal.

As a wireless internet service is commercially used, Windows operation systems configured to support Graphical User Interface (GUI), for example, Windows CE has been applied even to personal hand-carry terminals. Together with development of technology, personal hand-carry terminals are provided with various additional services and Windows operating systems configured to support GUI are applied to the personal hand-carry terminals to operate such various additional services conveniently.

As GUI operating systems are applied to the personal hand-carry terminals as user interface, other input devices are replacing the keypads that are disadvantageous in the GUI operation systems. Such input devices include optical pointing devices and touch panel sensors. Typically, such an optical pointing device is configured to gain and transmit image data of an object (human finger) surface from light irradiated from a light source to an image sensor along a predetermined optical sensor, to gain the same utility of a mouse cursor (or a pointer) provided in PC.

In addition, such a touch panel sensor may be provided on a display of an organic light emitting diode (ORED) or a liquid crystal display device that can display an image and can measure a coordinate of a human body part or a touch object, corresponding to the image provided by the display. The touch panel sensor can detect touch of a human body part in various ways. For example, the touch of the human body part can be detected according to a pressure reduction type, capacitive type or a resistive type. In the pressure reducing type, upper and lower electrodes are selectively touched by a predetermined pressure and in the capacitive type, variation of the capacity is detected at a touched point.

There are optical pointing devices for converting a direction in the personal hand-carry terminals. However, such the optical pointing devices have to have a predetermined thickness and a main tube to gain a travel passage of light. Accordingly, it is limited that such the optical pointing device is formed with a specific thickness and length or less and the structure of such the optical pointing device might be complex in case a mechanism for sensing a user's pressing. In addition, a light source for irradiating light to an object, an image sensor for analyzing the light and a prism for providing an optical passage to guide the light reflected by the object to the image sensor that are provided in the optical pointing device might be reasons resulting in the increase of the thickness of the personal hand-carry terminal.

**SUMMARY**

Accordingly, the embodiments may be directed to a movement sensing device and a method of sensing movement of an object. To solve the problems, an object of the embodiments may be to provide a movement sensing device that needs not compute a coordinate of an initial position of an object and a touch coordinate of a converted position, to detect movement of a touch point made by an object on a touch region, and a method of sensing movement of an object.

Another object of the present invention may be to provide a movement sensing device that is able to be less affected by the thickness of a terminal.

To achieve these objects and other advantages and in accordance with the purpose of the embodiments, as embodied and broadly described herein, a movement sensing device configured to detect movement of an object on a touch region, the movement sensing device includes three or more proximity sensors arranged on one surface adjacent to the touch region independently and two-dimensionally, to measure electrical scalars corresponding to distances with the object on the touch region, respectively; and a control unit configured to calculate a vector of a second touch point relatively changed with respect to a first touch point based on a first electrical scalar and a second electrical scalar measured at a predetermined time difference, wherein a relative moving signal with respect to a reference point is generated by calculating the movement of the object as the vector.

Here, the object may means a material that is able to affect the electrical scalars measured by the proximity sensors. For example, the object may include a human body part such as a finger, a tool such as a stylus pen and a touch pen, and other material capable of replacing those materials. At this time, the electrical scalar of the proximity sensor may refer to an electrical characteristic variable by approaching or retreating with respect to the object. It may mean a physical measured value used in sensing the approaching/retreating or a distance from each of the proximity sensors formed of a conductive material to the object based on the size or change amount of the electrical characteristics.

In other words, the three proximity sensors formed of the conductive material are positioned on the same or substantially one surface and they may be two-dimensionally positioned within or near the touch region. Accordingly, the distance to the object or the presence of the approaching or retreating can be sensed based on the amount of the scalars. The electrical scalar amounts may include resistance variations and capacity variations. The proximity sensors can recognize the approaching or retreating of the object via the increase or decrease of the scalar amount. Here, the proximity sensor may include a material formed of a conductive material including metal, ITO (Indium Tin Oxide), IZO (Indium Zinc Oxide), CNT or a sensor chip formed of those materials. Those sensors may be functioned as electrodes to generate the electrical scalars corresponding to approaching, repeating and passing of the object.

Here, the touch region may mean a specific region where the movement of the object is expected by the movement sensing device. The touch region may be defined together the boundary in the exterior appearance of the hand-carry terminal. Alternatively, the touch region may be as an approximate position without the boundary. The touch region may be an auxiliary region arranged adjacent to the display and it may be defined as an entire portion or a predetermined portion of the display.

As mentioned above, the movement sensing device may include the proximity sensors to sense changed electrical scalars according to the approaching or touching of the object and they may be arranged on the touch region two-dimensionally, separated from each other.

The positions of the three proximity sensors may be freely variables within the range where the electrical scalars can be changed. The number may be 3, 4, 6 or 9 and the positions thereof may be equiangular or non-equiangular.

When the object approaches the touch region where the proximity sensors are arranged, electrical scalars of the proximity sensors are changed. An electrical scalar measured first is referenced to as a first electrical scalar and an electric scalar re-measured at a time difference is referenced to as a second electrical scalar. When the position of the object is changed, there may be a difference between the first and second electrical scalars measured by each of the proximity sensors in this instance. A controller of a movement sensing device according to the present invention can calculate a vector of a second touch point relatively changed with respect to a first touch point.

The movement vector may be transmitted to a control unit provided in the personal hand-carry terminal. In case web surfing is currently operating, a relative movement amount of the pointer at a reference point with respect to the finger movement on the touch region may be determined. The absolute coordinate of the screen is pre-defined by the conventional touch panel and the defined absolute coordinate is reflected to the screen. Different from the prior art, the movement sensing device and the movement sensing method may calculate only the relative vector. Accordingly, the electrode structure can be simplified, with performing the same function.

The movement sensing device according to the present invention may generate a moving signal based on the vector calculated by the movement of the object and the movable signal may be used as a signal for pointer moving, scrolling, enlarging/reducing or panning on the display of the personal hand-carry terminal.

The movement sensing device may further include a touch sensor to calculate a vector of the second touch point relatively changed with respect to the first touch point, in case the object touches the touch sensor.

The three proximity sensors may be provided on the touch region and the scroll sensor arranged between the proximity sensors in horizontal and vertical directions. The scroll sensor may be applied to the vertical or horizontal movement of the object passing there through, prior to the proximity sensors.

In the movement sensing device according to the present invention, the proximity sensor may include a case electrode formed adjacent to the touch region, a substrate electrode formed on a printed circuit board where the control unit is formed, and a case where the case electrode is arranged, the case electrode and the substrate electrode may be electrically connected with each other.

The touch region of the movement sensing device may be formed only by the formation of the proximity sensor and it is easy to fabricate and design the touch region, because the touch region has a substantially single layer structure. Also, different from the optical pointing device, the movement sensing device can enhance the sensitivity and remarkably reduce the overall thickness, because the electrode structure thereof may be directly formed in the case or it may be formed by attaching a thin film to a bottom surface of the device.

In another aspect of the present invention, A method of sensing movement of an object on a touch region includes steps of: measuring first and second electrical scalars at a predetermined time different, corresponding to first and second touch points of the object, respectively; and calculating a vector of the second touch point relatively changed with respect to the first touch point, wherein the steps are performed by using three or more proximity sensors arranged on one surface adjacent to the touch region independently and two-dimensionally, to measure electrical scalars corresponding to distances with the object on the touch region, respectively.

## Advantageous Effect

According to the movement sensing device and the movement sensing method, the moving vector of the object moving on the touch region can be calculated only by using the electrical scalars of the proximity sensor measured at the start position and the changed position of the object. Accordingly, compared with the complex structure of the conventional touch panel that calculates the vector based on the calculated coordinates of the start position and the changed positions, the structure of the present invention may be much simpler and no time delay for the vector calculation is generated.

Furthermore, According to the movement sensing device and the movement sensing method, the touch region of the movement sensing device may form the predetermined portion of the outer surface together with the case of the personal hand-carry terminal. The proximity sensor may be attached to the back surface of the case. The substrate electrically connecting the proximity sensor and the control unit with each other is also mounted on the printed circuit board. Accordingly, the components of the movement sensing device may hardly affect the thickness of the personal hand-carry terminal.

Still further, According to the movement sensing device and the movement sensing method, the scroll sensor is further arranged between the proximity sensors in horizontal and vertical directions and it may improve the sensitivity of the vertical or horizontal movement of the object, with helping the proximity sensor.

The proximity sensor may have the multilayer structure and the sensing area can be enlarged on the limited touch area. Accordingly, the electrical scalars with respect to the movement of the object including the human finger may be sensed more precisely in the small touch region. In addition, the electrical scalar with respect to the movement of the object may be transmitted to the touch terminal and the proximity may have the curved portion or the conductor having the recess formed therein. Accordingly, the sensing area for the movement of the object on the touch region may be enlarged. It is to be understood that both the foregoing general description and the following detailed description of the embodiments or arrangements are exemplary and explanatory and are intended to provide further explanation of the embodiments as claimed.

## BRIEF DESCRIPTION OF THE DRAWINGS

FIG. 1 is a front view of a personal hand-carry terminal to which a movement sensing device according to one embodiment of the present invention is applied;

FIG. 2 is a sectional diagram of the personal hand-carry terminal shown in FIG. 1;

FIG. 3 is a partially enlarged view to describe a method of sensing movement that is implemented in the movement sensing device of FIG. 1;

FIG. 4 is a front view to describe a personal hand-carry terminal according to another embodiment of the present invention;

FIG. 5 is a front view to describe a personal hand-carry terminal according to a further embodiment of the present invention;

FIG. 6 is a front view to describe a personal hand-carry terminal according to a still further embodiment of the present invention;

FIG. 7 is a front view to describe a personal hand-carry terminal according to a still further embodiment of the present invention;

FIG. 8 is an enlarged view to describe a method of sensing movement in the personal hand-carry terminal of FIG. 7;

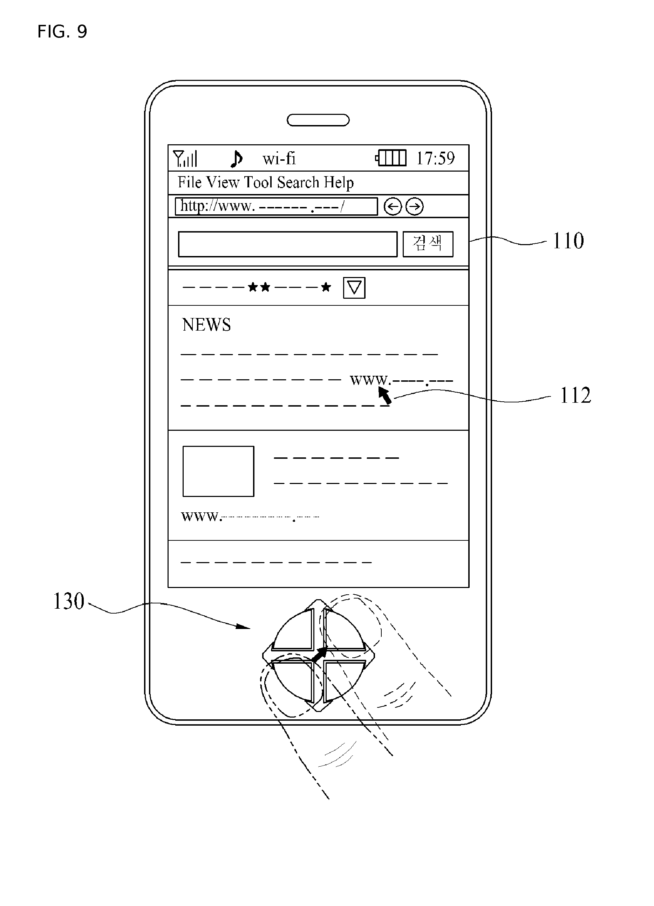

FIG. 9 is a front view to describe the method of sensing the movement that is implemented in the terminal hand-carry terminal of FIG. 7;

FIG. 10 is an enlarged view of a proximity sensor and a scroll sensor out of components that compose the movement sensing device according to one embodiment of the present invention;

FIGS. 11 and 12 are diagrams to describe operating conditions of the proximity sensor and the scroll sensor shown in FIG. 10;

FIG. 13 is a front view to describe the personal hand-carry according to another embodiment of the present invention;

FIG. 14 is an enlarged view to describe operation for each of touch regions in the movement sensing device of FIG. 13;

FIG. 15 is a front view to describe the personal hand-carry according to the further embodiment of the present invention;

FIG. 16 is a front view to describe the personal hand-carry according to the still further embodiment of the present invention;

FIG. 17 is a diagram illustrating a movement sensing device according to another embodiment of the present invention;

FIG. 18 is a sectional view of the movement sensing device according to the embodiment of FIG. 17;

FIG. 19 is a diagram illustrating a flexible printed circuit board of the movement sensing device according to the embodiment of FIG. 17;

FIG. 20 is a diagram illustrating the flexible printed circuit board of movement sensing device according to the embodiment;

FIG. 21 is a diagram to describe a structure of electrodes provided in a movement sensing device according to a further embodiment of the present invention;

FIGS. 22 and 23 are sectional views to describe a shield layer provided in a pointing device according to one embodiment of the present invention;

FIG. 24 is a front view of a personal hand-carry terminal to which the movement sensing device according to another embodiment of the present invention is applied;

FIG. 25 is an exploded perspective view schematically illustrating the flexible printed circuit board according to another embodiment of the present invention; and

FIG. 26 is a perspective view illustrating the movement sensing device according to another embodiment of the present invention.

## DETAILED DESCRIPTION

Preferred embodiments of the present invention will be described, referring to the accompanying drawings as follows. However, the embodiments are not to limit the present invention but to make the present invention understood more clearly. Reference may now be made in detail to specific embodiments, examples of which may be illustrated in the accompanying drawings. Wherever possible, same reference numbers may be used throughout the drawings to refer to the same or like parts.

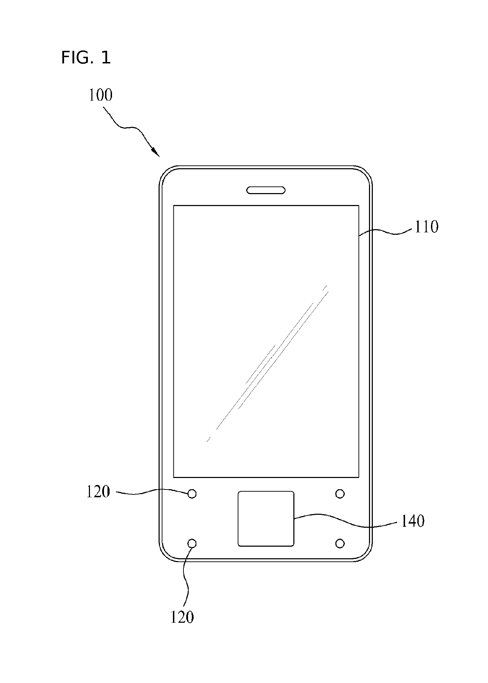

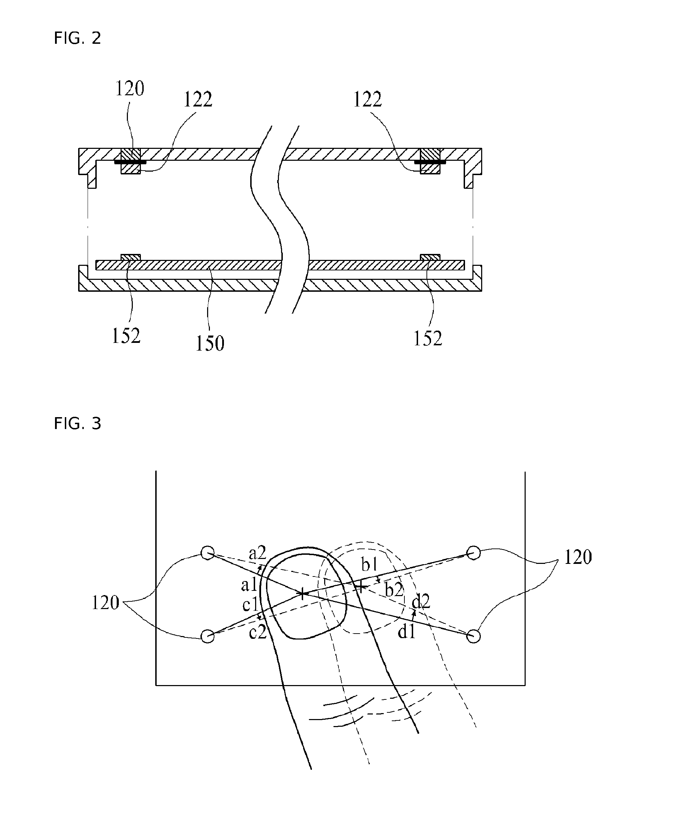

FIG. 1 is a front view of a personal hand-carry terminal to which a movement sensing device according to one embodiment of the present invention is applied. FIG. 2 is a sectional diagram of the personal hand-carry terminal shown in FIG. 1. FIG. 3 is a partially enlarged view to describe a method of sensing movement that is implemented in the movement sensing device of FIG. 1.

Referring to FIGS. 1 to 3, this embodiment provides a personal hand-carry terminal 100 including a display 110 arranged in a front portion thereof and a touch region 140 arranged under the display 110. The display 110 can recognize touch as it is or it can be provided only to display an image.

A user puts an end of his or her finger on the touch region 140 of the personal hand-carry terminal 100 and moves the end of the finger to move a pointer on a screen or move a menu selected from the screen, to enlarge or reduce the screen, to scroll in up, down, right and left directions or pan the screen.

Four proximity sensors 120 are exposed to a front of the terminal hand-carry terminal 100 and such proximity sensors 120 are provided as case electrodes formed in a case of the personal hand-carry terminal 100, with being arranged under the display 110 near the touch region 140. The proximity sensors 120 are connected with substrate electrodes 152 arranged on a circuit board 150 in the case, so as to be functionally connected with a microchip of the circuit board 150.

Without auxiliary equipments, the electrode connection structure using the proximity sensors 120 can replace the pointing device. Such the structure is a simple electrode connection and it can be fabricated at a remarkably less low cost, compared with the conventional optical pointing device. According to this embodiment, the proximity sensors 120 are exposed outside the case and conductive elastic rubber materials 122 are formed under the proximity sensors 120 or the electrodes 152 of the substrate, respectively, such that case electrodes of the proximity sensors 120 may be electrically connected with the substrate electrodes, together with the assembling of the case.

In case the terminal is a bar type terminal, the case of the terminal consists of an upper case and a lower case assembled to each other. A retaining hole may be formed in an upper front portion of the upper case to expose the display 110 outside and the display 110 may be connected with a control unit mounted on the circuit board 150 to receive an image signal via the control unit and to provide an image determined based on the image signal. Films capable of recognizing touch may be disposed on a top surface of the display 110. As the case may be, the display 110 can be configured only to display an image, with no touch recognition function, so as to lower the fabrication cost of the terminal.

In this embodiment, the proximity sensors 120 may be arranged under the display 110 and configured to detect movement of the finger on the touch region 140 and a region near the touch region 140 via electrical scalar. However, if the finger touches the proximity sensor 120 directly, such electrical scalar may increase noticeably and such electrical touch can be recognized by button touch or button clicking, not by the finger movement sensing. In other words, rather than the case that the movement of the finger is detected via the proximity sensor 120, there may be provided an input function equivalent to the button input, using the case electrode exposed outside the case or arranged on a back side of the case.

Referring to FIG. 3, the human finger may be moved from one point (a solid line) to another point (a dotted line) within the touch region. At this time, first electrical scalars (a1, b1, c1 and d1) corresponding to the distance between the points can be detected by the proximity sensors 120 and second electrical scalars (a2, b2, c2 and d2) can be detected after the movement of the finger.

In this instance, a difference between the first electrical scalar and the second electrical scalar may be defined by a following arithmetic formula:

**[Formula 1]**

$$A = a_2 - a_1, B = b_2 - b_1$$

$$C = c_2 - c_1, D = d_2 - d_1$$

When coordinates of fourth points shown in FIG. 3 are defined as $(X_n, Y_n)$, $(X_{n+1}, Y_n)$, $(X_n, Y_{n+1})$ and $(X_{n+1}, Y_{n+1})$, a coordinate of a start point of a moving vector is (0, 0) and a coordinate of a finish point is (X, Y) as shown below. Meanwhile, a reference point with respect to the coordinate may be one point out of the touch region or one point within the touch region that is variously changeable according to a design condition.

[Formula 2]

$$X = \frac{A X_n + B X_{n+1} C X_n + D X_{n+1}}{A + B + C + D}$$

$$Y = \frac{A Y_{n+1} + B Y_{n+1} + C Y_n + D Y_n}{A + B + C + D}$$

In other words, it is determined that the size of the moving vector be:

$$\sqrt{X^2 + Y^2} \ \blacksquare$$

, and that the direction of the moving vector be:

$$tan^{-1}\frac{Y}{X}$$

According, a passage of the moving object is realized on the display via the moving vector. In this instance, the size of the moving vector is properly converted corresponding with the sizes of the touch region and the display, only to be realized on the display.

Specifically, when only a start point is determined by the touch made by the object on the touch region is determined, the movement of the object may be realized on the display according to the formula. A coordinate of a finish point is also calculated based on the start point and (X, Y).

According to the movement of the object after that, the finish point is a start point such that the movement of the object on the touch region can be realized on the display based on the method mentioned above.

In this embodiment, the moving vector from a first touch point to a second touch point is relatively calculated based on a difference between first and second electrical scalars, compared with the prior art in that a first touch point and a second touch point are directly calculated based on first and second electrical scalars, respectively.

In this instance, a complicated structure configured to absolutely detect the first and second touch points can be omitted and a free pointing device can be realized with a simply single layer structure. Of course, the proximity sensor 120 configured to form the single layer electrode structure can be formed of a metallic or transparent electrode material. The proximity sensor may be arranged in an outer or inner surface of the case or it may be integrally formed with the case.

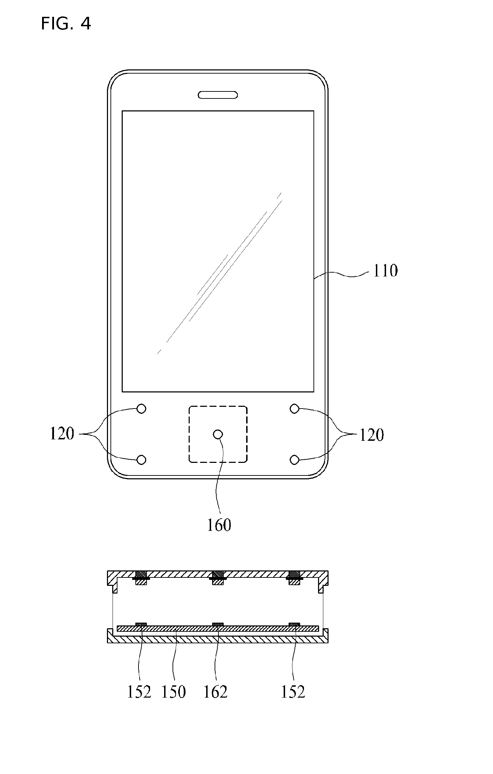

FIG. 4 is a front diagram to describe a personal hand-carry terminal according to another embodiment of the present invention.

Referring to FIG. 4, the personal hand-carry terminal may include the display 110, the touch region 140 and the proximity sensor 120, like the personal hand-carry terminal according to the embodiment mentioned above. The detailed description of those parts according to this embodiment can refer to the description and drawings of the embodiment mentioned above. The personal hand-carry terminal according to this embodiment may further include a touch sensor 160 arranged in a center area of the touch region 140. The touch sensor 160 is configured to determine whether the finger directly touches on the touch region 140. Unless a signal having a predetermined strength is generated, the touch sensor 160 may not reflect even the finger movement detected by the proximity sensor 120.

According to this embodiment, even a touch sensor 160 may be connected with an electrode 162 of a substrate via a conductive elastic rubber material. This structure can be simply realized by additionally arranging an electrode structure to the circuit board. One touch sensor 60 or a plurality of touch sensors 60 may be provided and arranged adjacent to the touch region, not a center portion of the touch region.

The touch sensor 160 and the proximity sensor 120 may be formed in the same structure. Optionally, the difference between the touch sensor 160 and the proximity sensor 120 may be that direct touch or a signal having a predetermined strength or more is required to detect only the finger movement. Various input conditions may be proposed by using the intensity or duration time of the signal detected by the touch sensor 160.

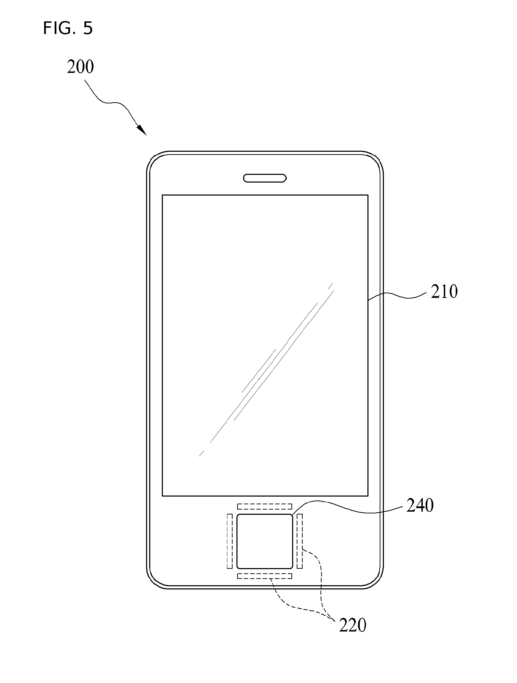

FIG. 5 is a front view to describe a personal hand-carry terminal according to a further embodiment of the present invention.

Referring to FIG. 5, a personal hand-carry terminal 200 may include a touch region 240 arranged under a display and four proximity sensors 220 disposed on a back side of the touch region or under the touch region in a multilayer structure. The proximity sensors 220 may be arranged in four sides along an edge portion of the touch region, respectively, and they can calculate a relative moving vector between a first touch point and a second touch point along the moving finger on the touch region 240.

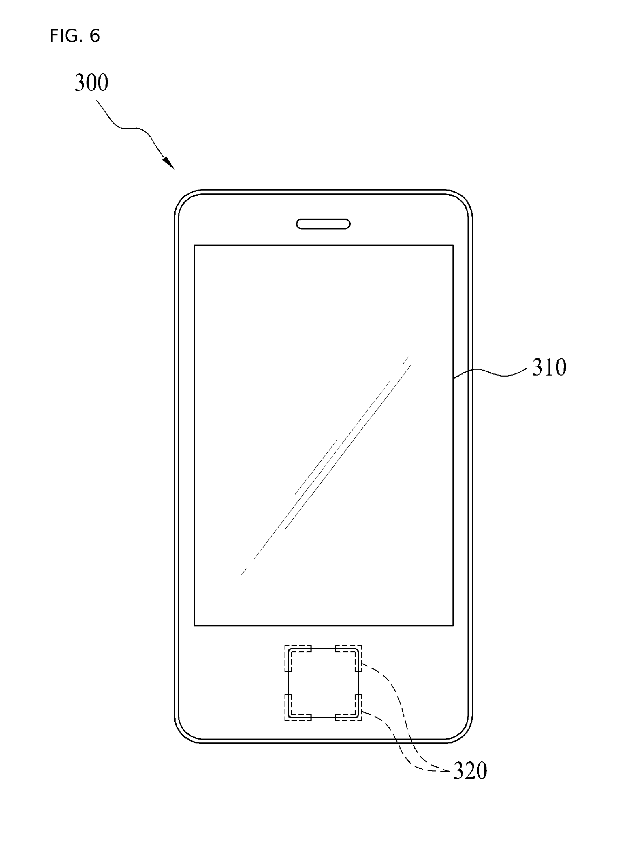

FIG. 6 is a front view to describe a personal hand-carry terminal according to a still further embodiment of the present invention.

Referring to FIG. 6, a personal hand-carry terminal 300 may include a touch region 340 arranged under a display and four proximity sensors 320 disposed on a back side of the touch region or under the touch region in a multilayer structure. The proximity sensors 220 may be arranged in four corners of the touch region 340, respectively, and they can calculate a relative moving vector between a first touch point and a second touch point along the moving finger on the touch region 240.

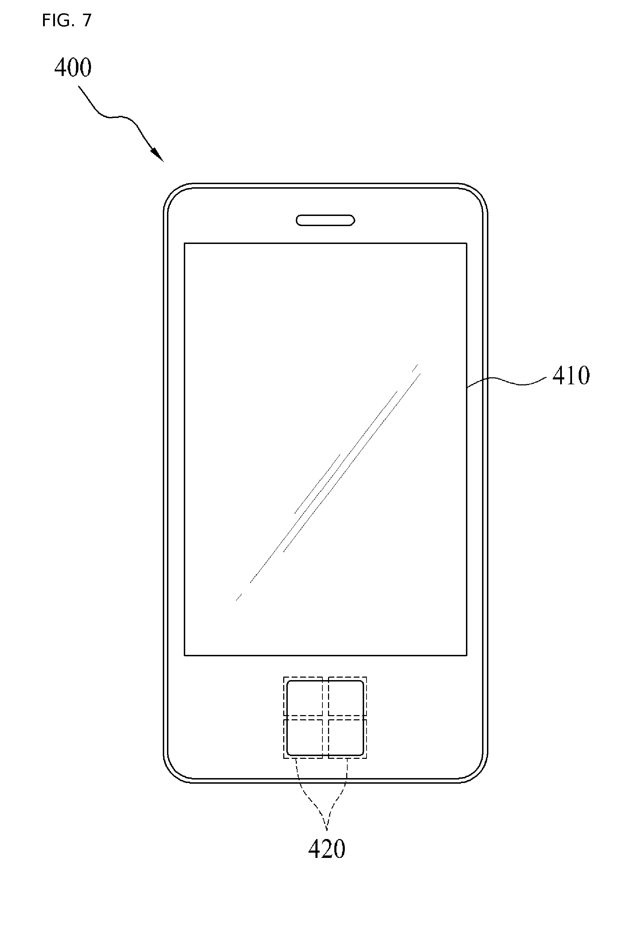

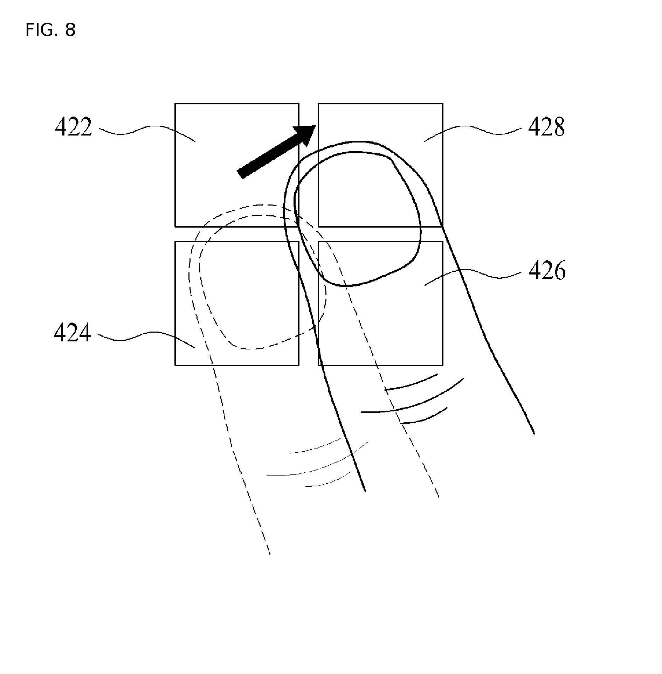

FIG. 7 is a front view to describe a personal hand-carry terminal according to a still further embodiment of the present invention. FIG. 8 is an enlarged view to describe a method of sensing movement in the personal hand-carry terminal of FIG. 7.

Referring to FIGS. 7 and 8, a personal hand-carry terminal 400 includes a touch region 440 and proximity sensors 420 arranged in the touch region 440. Different from the embodiment mentioned above, the plurality of the proximity sensors 420 may be arranged in the touch region 440, not adjacent to or outside the touch region 440, and a relative distance with the object may be designed largely affected by an overlapped area by the finger.

As shown in FIG. 8, when the finger moves from a first point to a second point, the capacity is changed at each of the proximity sensors 422 to 428 according to an area overlapped with the finger. A relative moving vector between the first touch point and the second touch point can be calculated according to electrical scalars including the changed capacities..

The movement vector may be transmitted to a control unit provided in the personal hand-carry terminal. In case web surfing is currently operating, a relative movement amount of the pointer at a reference point with respect to the finger movement on the touch region may be determined.

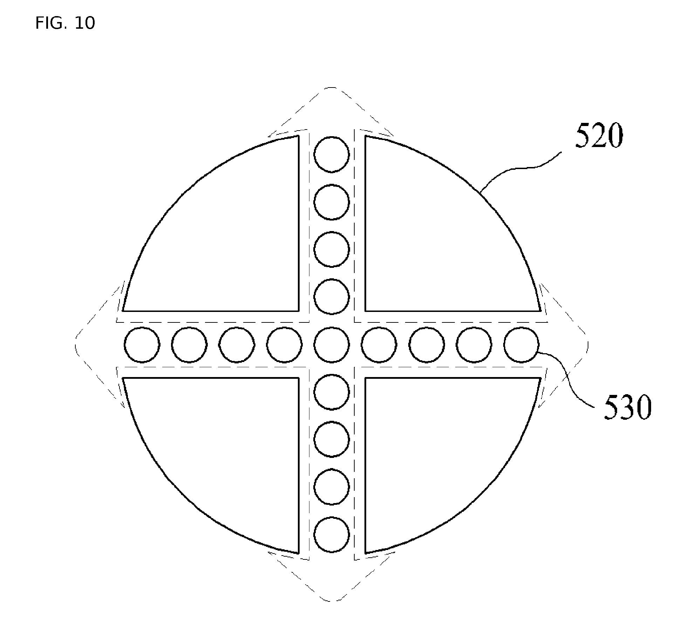

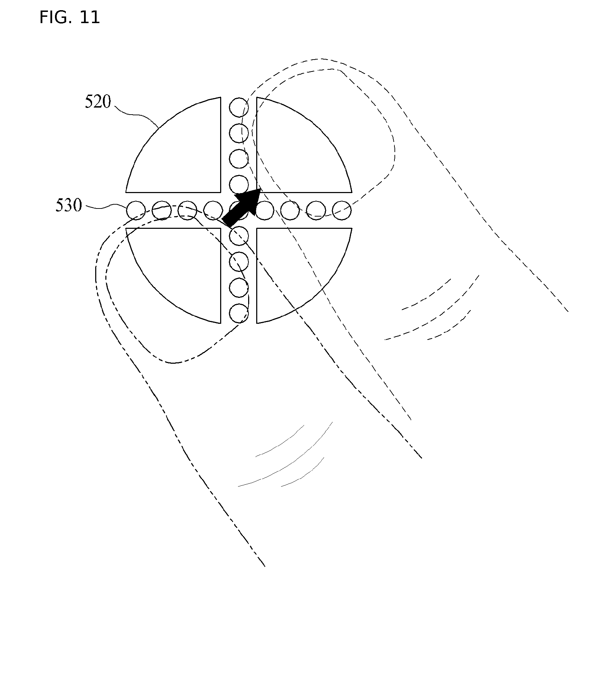

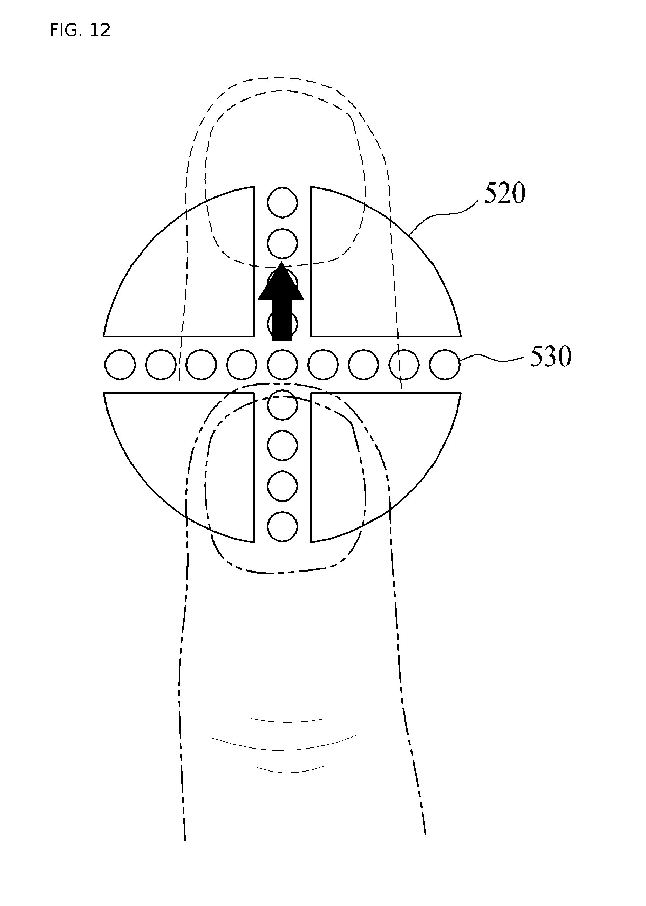

FIG. 10 is an enlarged view of a proximity sensor and a scroll sensor out of components that compose the movement sensing device according to one embodiment of the present invention. FIGS. 11 and 12 are diagrams to describe operating conditions of the proximity sensor and the scroll sensor shown in FIG. 10.

Referring to FIG. 10, a personal hand-carry terminal includes proximity sensors 520 having variable electrical scalars according to approaching or touching of the object, respectively. The proximity sensors 520 may be arranged on a touch region separately and two-dimensionally.

The proximity sensor 520 may be not rectangular-shaped but fan-shaped. As the case may be, the shape of the proximity sensor 520 may be freely variable only in a range where an electrical scalar can be changed by the object approaching or touching a touch region.

When the object approaches the touch region where the proximity sensors 520 are arranged, electrical scalars of the proximity sensors 520 are changed. An electrical scalar measured first is referenced to as a first electrical scalar and an electric scalar re-measured at a time difference is referenced to as a second electrical scalar. When the position of the object is changed as shown in FIG. 11, there may be a difference between the first and second electrical scalars measured by each of the proximity sensors 520 in this instance. A controller of a movement sensing device according to the present invention can calculate a vector of a second touch point relatively changed with respect to a first touch point.

Corresponding to a distance between the object and each of the proximity sensors 520, the capacity scalar of the proximity may be determined. According to this embodiment, the object is moving in a state of being partially overlapped with the proximity sensor 520 of the touch region 204 and the capacity scalars of the proximity sensors are in proportion to the overlapped areas of the proximity sensors with the object.

The movement sensing device according to this embodiment may further include a scroll sensor 530 arranged between each two of the proximity sensors 520 in horizontal and vertical directions. The scroll sensor 530 may be applied to the vertical or horizontal movement of the object passing the scroll sensors 530, prior to the proximity sensor 520. In other words, in case the object passes an upper portion of the scroll sensor, the strength of electrical change generated by the scroll sensor 530 may be noticeably increased. In this instance, a scroll operation of the scroll sensor 530 may be implemented prior to the movement with respect to the proximity sensor 520.

In case screen switch is required, the scroll sensor 530 may be useful. For example, in case of panning a screen simply or searching for a telephone number or a message from the list, the scroll sensor 530 may be useful. Accordingly, if movement to a navigation device is not needed, the function implemented by the proximity sensor 520 is inactivated and only the function implemented by the scroll sensor 530 is activated to make the scroll function be used naturally and precisely.

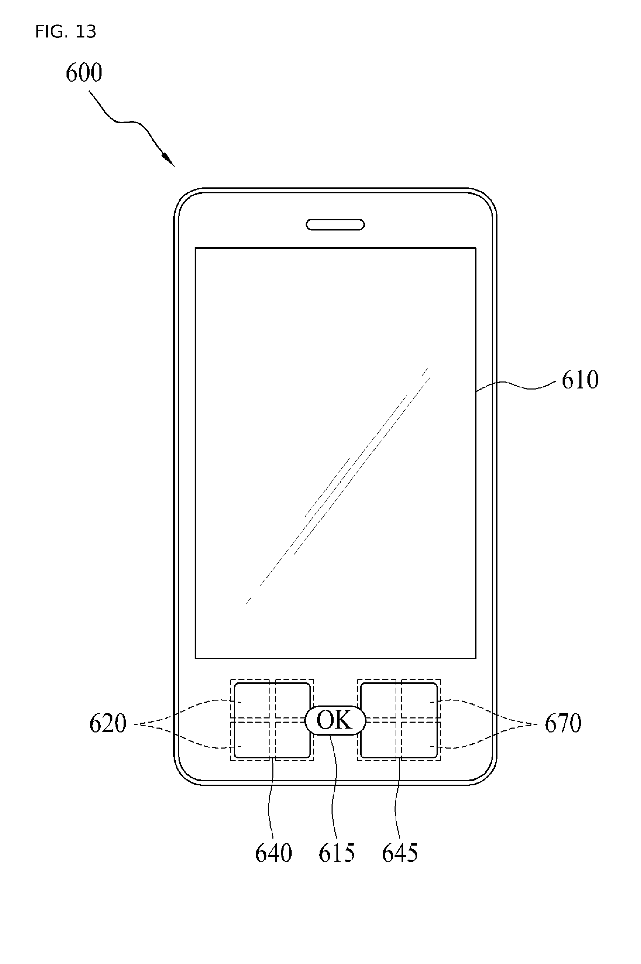

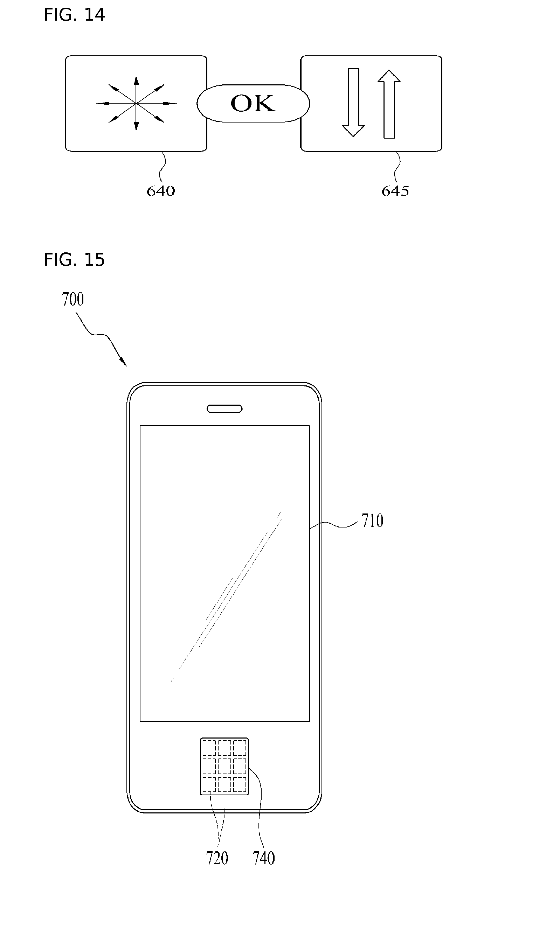

FIG. 13 is a front view to describe the personal hand-carry according to another embodiment of the present invention. FIG. 14 is an enlarged view to describe operation for each of touch regions in the movement sensing device of FIG. 13.

Referring to FIGS. 13 and 14, the movement sensing device may include a plurality of touch regions 640 and 645. As shown in the drawings, a left touch region 640 may implement a function based on movement of the pointer and the movement sensing device may include a proximity sensor 620 for the function. A right touch region 645 may implement another function distinguished from the function implemented based on the movement of the pointer. This function may include scrolling, rotating, screen panning and screen reducing/enlarging.

In addition, based on a currently operating program or a characteristic of the currently implementing function, the right and left touch regions 645 and 640 properly distribute the functions including the pointer moving, scrolling, screen panning and screen reducing/enlarging, to prevent inference of command signals.

FIG. 15 is a front view to describe the personal hand-carry according to the further embodiment of the present invention.

Referring to FIG. 15, a touch region 740 may be provided under the display and nine proximity sensors 720 may be arranged in the touch region 740. Those nine proximity sensors 720 may be provided on one side of the touch region and connected with a microchip along metallic lines of substrates. Precise control can be enabled by the nine proximity sensors 720 and the arrangement, sizes and number of the proximity sensors 720 may be adjustable variously only if the number and precision of substrate electrodes can be maintained properly.

Commands with various conditions can be distinguished from each other by using the plurality of the proximity sensors 720. For example, when a pointer and a menu are moved via a boundary portion of the touch region, rather than in the touch region, for example, in case the finger positioned outside the touch region moves inside the touch region or completely passes the touch region in a longitudinal or traverse direction, functions including scrolling and screen panning may be implemented. In case the finger rotates or moves along the boundary portion, a function of screen enlarging/reducing may be implemented.

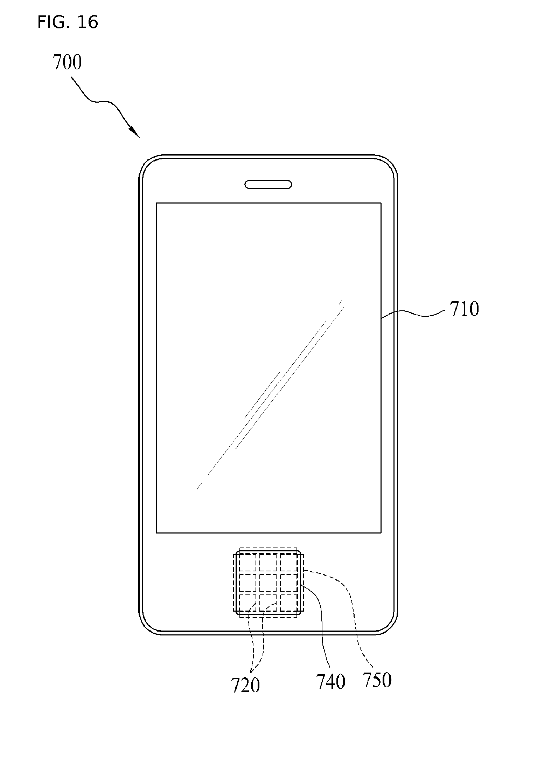

FIG. 16 is a front view to describe the personal hand-carry according to the still further embodiment of the present invention.

Referring to FIG. 16, the touch region 740 may be provided under the display and the nine proximity sensors 720 may be arranged in the touch regions 740. The nine proximity sensors 720 may be provided in the substantially same side and connected with the microchip along metallic lines of the substrates.

According to this embodiment, a boundary electrode 750 may be further provided along a boundary portion of the touch region 740. The boundary electrode 750 may be in the boundary portion of the touch region 740 or adjacent to the boundary portion. The boundary electrode 750 may be formed in a ring shape continuously connected or a partially cut shape independently connected with a chip. The boundary electrode 750 may be corresponding to four sides of the touch region 740 and configured to detect approaching or touching of the finger. However, the boundary electrode may be formed in corners and it may be circular-shaped in case the touch region is circular-shaped.

In case of using the boundary electrode 750, clearer control may be enabled. For example, For example, when a pointer and a menu are moved via a boundary portion of the touch region, rather than in the touch region, specifically, in case the finger positioned outside the touch region moves inside the touch region, the boundary electrode may be used as right and left scroll according to directions. Or, in case the finger completely passes the touch region in a longitudinal or traverse direction by the boundary electrode 750, the proximity sensor 740 and the boundary electrode 740 sensing the finger sequentially, the boundary electrode may be used for screen panning or page backward. In case the finger is rotary moving along the boundary electrode 750, various freely settable functions including image or text enlarging/reducing may be implemented. In addition, the boundary electrode 750 may be controlled to respond to right or left clicking and double-clicking of a computer mouse, corresponding to light touch with respect to right and left portions of boundary electrode 750.

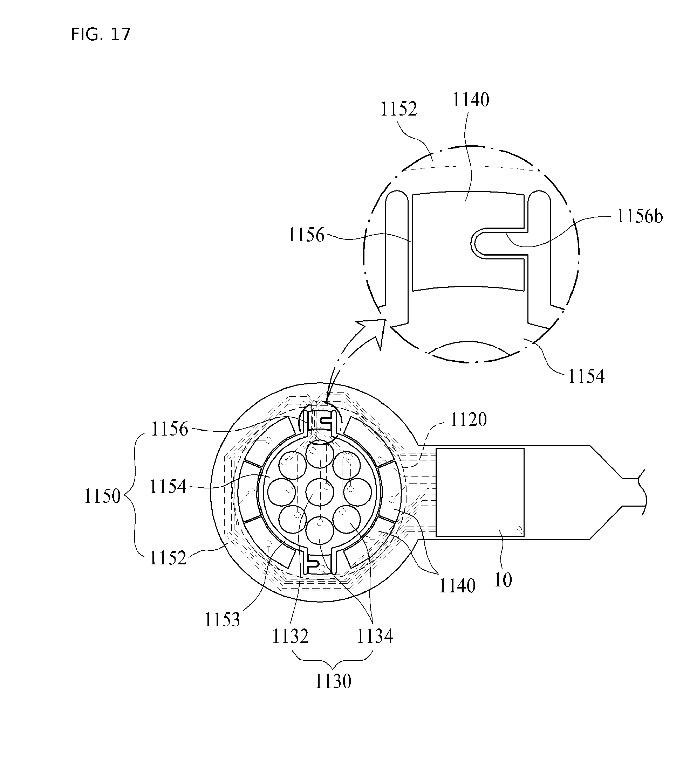

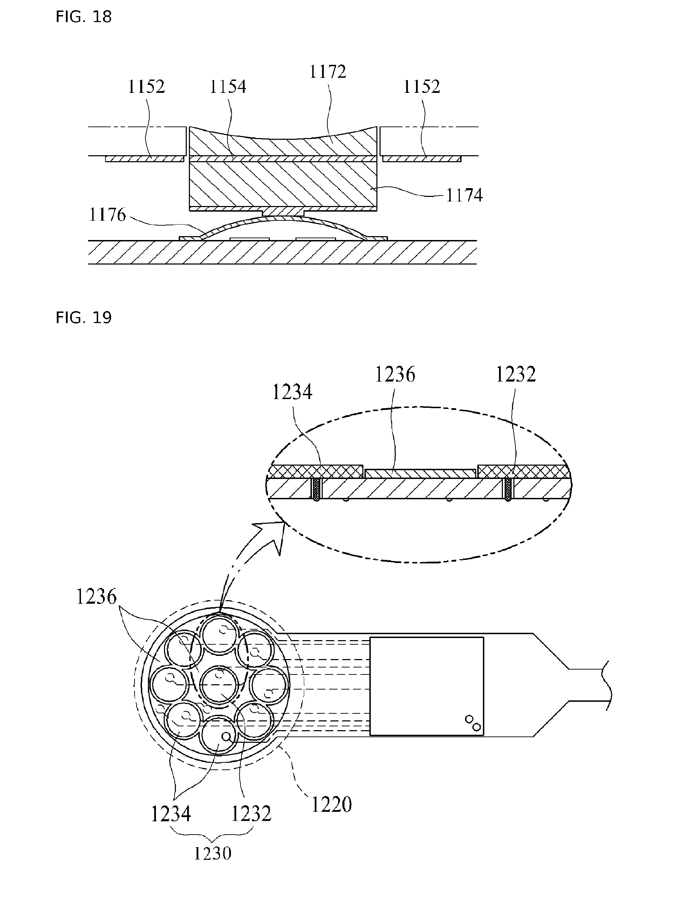

FIG. 17 is a diagram illustrating a movement sensing device according to another embodiment of the present invention. FIG. 18 is a sectional view of the movement sensing device according to the embodiment of FIG. 17.

Referring to FIGS. 17 and 18, the movement sensing device includes a flexible printed circuit board 1150 on which proximity sensors 1130 are arranged. The flexible printed circuit board 1150 includes a boundary substrate 1152 having a movable space 1153 formed therein, a movable substrate 1154 pushing-operably arranged in the movable space 1153, and a connecting substrate 1156 arranged on a pointing region to connect the boundary substrate 1152 and the movable substrate 1154 with each other.

The flexible printed circuit board (FPCB) 1150 may be a typical FPCB formed by configuring a complex circuit on a flexible insulative film and the present invention is not limited by types and characteristics of the FPCB.

The boundary substrate 1152 has the movable space 153 formed therein. The structure and characteristics of the boundary substrate 1152 may be variable according to required conditions or designs. For example, the boundary substrate 1152 may be formed in a circular-ring shape, with an approximately-circular movable space 1153. As the case may be, the boundary substrate may be formed in a non-circular shape, a polygonal shape or other geometrical shapes. It is possible for an exterior appearance of the boundary substrate and the movable space to be formed in different shapes.

According to this embodiment, the boundary substrate 1152 may be formed in a shape of a closed loop. However, as the case may be, the boundary substrate may be formed in an open loop shape.

The movable substrate 1154 may be arranged in the movable space 1153 of the boundary substrate 1152, to be pushed. The movable substrate 1154 may be connected with the boundary substrate 1152 via the connecting substrate 1156. For example, the movable substrate 1154 may be circular-shaped, corresponding to the movable space 1153. Here, the expression 'pushing-operably arranged' means that at least predetermined portion of the movable substrate 1154 is able to be pushed downwardly.

The connecting substrate 1156 may be configured to connect the movable substrate 154 and the boundary substrate 1152 with each other. The position and number of the connecting substrates 1156 may be variable according to required conditions and design versions. For example, one connecting substrate 1156 may be provided and the movable substrate 1154 may be connected with the boundary substrate 1152 via one connecting substrate 1156 in a cantilever type. This embodiment of the present invention describes one connecting substrate and a plurality of connecting substrates may be spaced apart a predetermined distance from each other.

The boundary substrate 1152, the movable substrate 1154 and the connecting substrate 1156 may be integrally formed with each other by partially eliminating a single substrate. For example, a single substrate is partially eliminated in a typical punching or cutting process. As the case may be, auxiliary substrates are provided to form the boundary substrate, the movable substrate and the connecting substrate, respectively, and they are connected with each other after that.

A predetermined portion of the pointing region 1120 may be a pushing-operable button and the movable substrate 1154 may be mounted in the button 1172 and 174 or on a surface of the button. Proximity sensors 1130 which will be described later may be provided on the movable substrate 1154 and the user may move the finger on an upper surface or an exposed surface of the button 1172 and 1174 to implement a pointing device. The button 1172 and 1174 is pushed to operate a dome switch 1176 provided under the button.

Such a structure is noticeably simple and efficient, compared with the structure of the conventional optical pointing device, and there is no structural change in the conventional button. Accordingly, there is no problem in the durability of the device. The pointing device including a lens, a body tube and a sensor has to move in the conventional optical pointing device to operate the button. However, the pointing mechanism according to this embodiment may be formed on the FPCB and advantageous when it is applied to the button.

Moreover, the position of the button 1172 and 1174 is structurally limited in this embodiment of the present invention and a top surface of the button 1172 and 1174 may be formed concavely to make the finger move easily and smoothly. However, the top surface of the button may be formed plane.

The proximity sensor 1130 may be provided on the movable substrate 1154 and it can detect the movement of the finger (or a stylus pen) on the pointing region 1120. The proximity sensor 1130 may implement a function of sensing a direction based on a signal generated by the proximity sensor, corresponding to the movement of the object.

The structure of the proximity sensor 1130 may be variable according to required conditions or design versions. There will be described the proximity sensor 1130 that includes a plurality of direction electrodes as follows.

For example, the proximity sensor 1130 may include a central electrode 1132 and one or more peripheral electrodes 1134 arranged around the central electrode 1132. The peripheral electrodes may be radially provided an outer portion of the central electrode 1132 along a circumferential direction in equiangular arrangement. The central electrode and the peripheral electrodes may be connected with control chips of the terminal or the microchip of the pointing device at a ratio of 1:1. In addition, each connection line between the central electrode 1132 and each peripheral electrode 1134 along the connecting substrate 1156 may be connected to the microchip of the pointing device. In this embodiment, the central electrode and the peripheral electrodes are formed on a single surface of the flexible printed circuit board. However, as the case may be, the central electrode and the peripheral electrodes may be formed in opposite surfaces of the flexible printed circuit board, respectively.

The peripheral electrode 1134 may be an electrode employed as a ground electrode. Optionally, it may be an electrode configured to detect change in the capacity according to a touch area with the finger. The former case that the peripheral electrodes 1134 are configured as grounds will be described in detail as follows.

Here, the central electrode 1132 and the peripheral electrodes 1134 have a simple structure and they can be fabricated at a remarkably lower cost.

In the embodiment of the present invention, eight peripheral electrodes are radially arranged with respect to the central electrode 1132.

As the case may be, the number of the peripheral electrodes may be increased to detect the finger more precisely. Also, the peripheral electrodes may be arranged in more than two lines to have radial distances with respect to the central electrode, respectively.

It is possible to form the central electrode and the peripheral electrodes in a non-circular, polygonal or other geometrical shapes. An exterior appearance defined by the central electrode and the peripheral electrodes may be variable according to required conditions and design versions. The plurality of the peripheral electrodes may be arranged to form the equiangular arrangement at the same distance from the electoral electrode and each of the peripheral electrodes may have a different shape and a different size.

Meanwhile, various sensing mechanisms configured to implement the other functions rather than the direction sensing function may be applied to the boundary substrate 1152. The present invention is not limited such sensing mechanisms. For example, a boundary electrode 1140 may be provided on the boundary substrate 1152. Another function distinguished from the direction sensing function may be implemented based on a signal generated as the boundary electrode 140 senses movement of the object.

Eight boundary electrodes 1140 provided along the boundary substrate 1152 will be described as follows. The eight boundary electrodes may be formed in a circular shape, non-circular, polygonal or the other geometrical shape according to required conditions and design versions. Each of the boundary electrodes has the same or different shape and size. The boundary electrodes 1140 may be also connected with the control chip of the terminal or the microchip of the pointing device at a ratio of 1:1. Here, eight boundary electrodes 1140 are provided in this embodiment and the number may be increased to detect the moving of the finger precisely. Alternatively, the boundary electrodes may be integrally formed with each other.

In case the touch region 220 is a very small space approximately less than 1□ * 1□, it is advantageous that the boundary electrodes (or direction electrodes) may be arranged in a circular array (radial array), not in a lattice array.

If the direction electrodes are arranged in a 3*3 lattice, distances between electrodes arranged in vertical and horizontal directions is different from distances between electrodes arranged along diagonal directions with respect to the central electrode. Accordingly, the calculation of the distances might be complicated and it is more likely that an error is generated. However, when the direction electrodes are radially arranged in the equiangular arrangement with the same distance there between, each of the direction electrode may be arranged at the same distance from the central electrode. Accordingly, such a complicated mathematical expression is not required and the error generation may be minimized. Also, the movement of the finger can be sensed more efficiently.

Moreover, if the touch region is provided in a tiny region smaller than 1□*1□, the proximity sensor can be provided in the small region and the signal generated based on the movement of the object can be implemented on the display, even without implementing touch input to the entire display, according to the trend of enlarging the display of the personal hand-carry terminal according to this embodiment and simultaneously reducing the entire volume of the terminal. Compared with the touch region formed under the display, this embodiment has an advantage of implementing touch input, simultaneously with reducing the product cost.

It is described that this embodiment is embodied in the personal hand-carry terminal. however, the embodiment can be applied to various products configured to implement the display as the touch region, because the touch region according to this embodiment can be formed in the small region of 1□*1□. Specifically, in case the touch region according to this embodiment is implemented on a portion where a driver's hand is typically located in a navigation device typically implemented by touch on a display, without a touch pad provided under a display to recognize touch input, a driver can operate the navigation device conveniently while he or she is driving.

Referring to FIG. 17 again, one or more movable slit 1156a may be formed in the connecting substrate 1156 to secure movability of the movable substrate 1154 with respect to the boundary substrate 1152. Especially, in case the plurality of the connecting substrates 1156 are provided, the movable slit 1156a can allow the connecting substrates 1156 twisted or moved in the pushing operation and the movabilty of the movable substrate 1154 can be secured stably.

According to this embodiment, movable slits are formed in a predetermined portion of the connecting substrate along a traverse direction. As the case may be, one or more movable slits may be formed along a longitudinal direction or other inclined directions. Optionally, a plurality of movable slits may be crossed with each other.

FIG. 19 is a diagram illustrating a flexible printed circuit board of the movement sensing device according to the embodiment of FIG. 17. A proximity sensor 1230 according to this embodiment a plurality of electrodes. Referring to FIG. 19, a structure is shown that circular-shaped electrodes 1230 are arranged in a circular array on a flexible printed circuit board of a movement sensing device.

The proximity sensor 1230 includes a central electrode 1232 arranged in a touch region 12220 in a circular shape, peripheral electrodes 1234 radially arranged with respect to the central electrode 1232 in an equiangular array. Each of the electrodes 1232 and 1234 are electrically connected with a microchip positioned on the right at a ratio of 1: 1 and with a main printed circuit board of a terminal via conventional connection terminals.

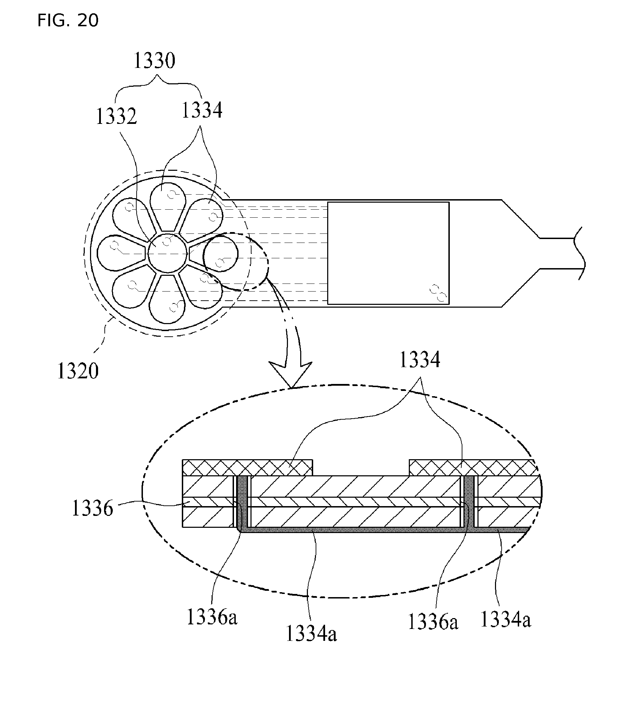

FIG. 20 is a diagram illustrating the flexible printed circuit board of movement sensing device according to the embodiment. Referring to FIG. 20, a proximity sensor of this embodiment includes a plurality of direction electrodes 1330 arranged in a shape of chrysanthemum petals.

The direction electrodes include a central electrode 1332 arranged in a center of a pointing region 1332 and peripheral electrodes 1334 radially arranged to form an equiangular array with respect to the central electrode. Each of the peripheral electrodes 1334 may have the size gradually expanded from one end adjacent to the central electrode 1332 toward the other end and the peripheral electrodes 1334 may form an approximately chrysanthemum-like shape, together with the central electrode 1332. Similar to the embodiments mentioned above, in case the movement of the finger is sensed on a boundary portion of the touch region 1320 in this structure, other functions distinguished from the direction sensing can be implemented. Also, there is an advantage that the peripheral electrodes 1334 may be arranged more closely with each other than with the central electrode 1332 in the proximity sensor 1330 arranged in the chrysanthemum shape.

Meanwhile, as shown in FIGS. 19 and 20, some of the electrodes may be ground electrodes 1236 and 1336 configured to electrically close a connection line of neighboring other direction electrodes with respect to a direction electrode at which the finger is sensed.

In other words, in case the finger is positioned on a specific one of the direction electrodes, an electrical characteristic including the capacity at the corresponding direction electrode or near the direction electrode may change. If such electrical property change affects a connection line between other electrodes adjacent to the electrode where the finger is sensed, noise might be generated in the process of calculating the movement of the finger. However, according to this embodiment, the ground electrodes are provided to prevent the electrical property change generated during the finger sensing enabled by the specific one direction electrode from affecting the connection line between neighboring electrodes.

The ground electrodes 1246 and 1336 may have various structures according to required conditions and design versions.

For example, as shown in FIG. 19, the ground electrode 1236 may be on the plane between each two of the electrodes 1232 and 1234 and it may prevent the connection line of the neighboring direction electrodes from being interfered with the electrical property change generated while the finger sensing is implemented by the specific electrode 1232 and 1234.

Alternatively, as shown in FIG. 20, the ground electrode 1336 may include a via-hole 1335a to pass the connection line of each two of the electrodes 1332 and 1334 there through and the via-hole 1336a may be arranged under the ground electrode 1336. Accordingly, the electrical property change generated during the finger sensing implemented at the specific electrode 1332 and 1334 can be prevented from affecting the connection line between the other neighboring direction electrodes more effectively.

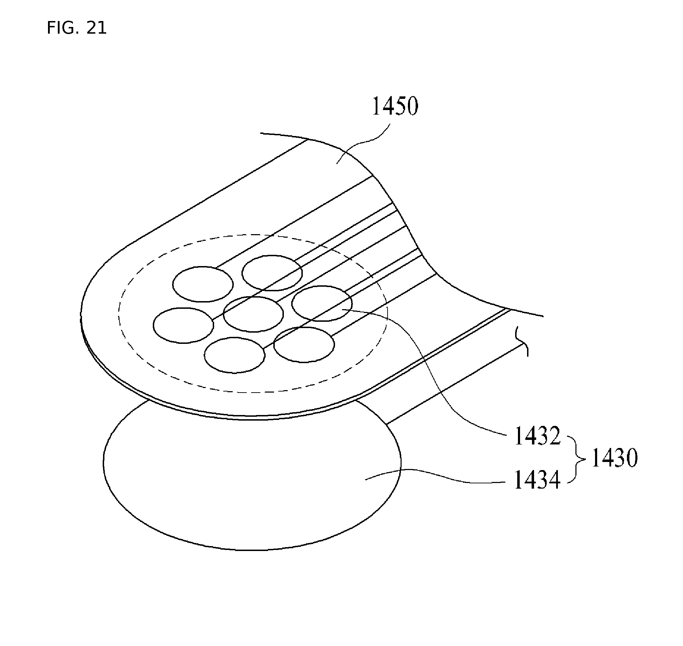

FIG. 21 is a diagram to describe a structure of electrodes provided in a movement sensing device according to a further embodiment of the present invention.

Referring to FIG. 21, a personal hand-carry terminal according to this embodiment also provides a touch region on a substrate 1450 and a proximity sensor 1450 is provided in the touch region. The proximity sensor 1430 may include a plurality of upper electrodes 1432 formed in the touch region on the plane and a lower electrode layer 1434 positioned under the upper electrodes, electrically independent from the upper electrodes 1432. The lower electrode layer 1434is may be formed on a back side of a substrate 1450 and generate a pulse signal transmitted from an external device in full-scale. When the finger is positioned on a specific one of the upper electrodes 1432, an electrical property such as the capacity may be changed at the specific one or in a portion adjacent to the specific one. At this time, a pulse signal changed more than pulse signals of the other upper electrodes 1432 is generated the movement sensing device can sense the movement of the object by using such the characteristic.

The electrode pattern structure and the multilayer structure are more complex than the structure mentioned above. However, the proximity sensor 1430 can implement various functions and such various functions may include scrolling, screen panning, page forward or backward, screen rotating, screen enlarging/reducing, speed or volume adjusting and so on.

Of course, the upper electrodes 1432 may be connected with the control chip of the terminal or the microchip of the pointing device at a ratio of 1:1. The lower electrode layer 1434 may be a single broad electrode connected with the control chip of the terminal or the microchip of the pointing device.

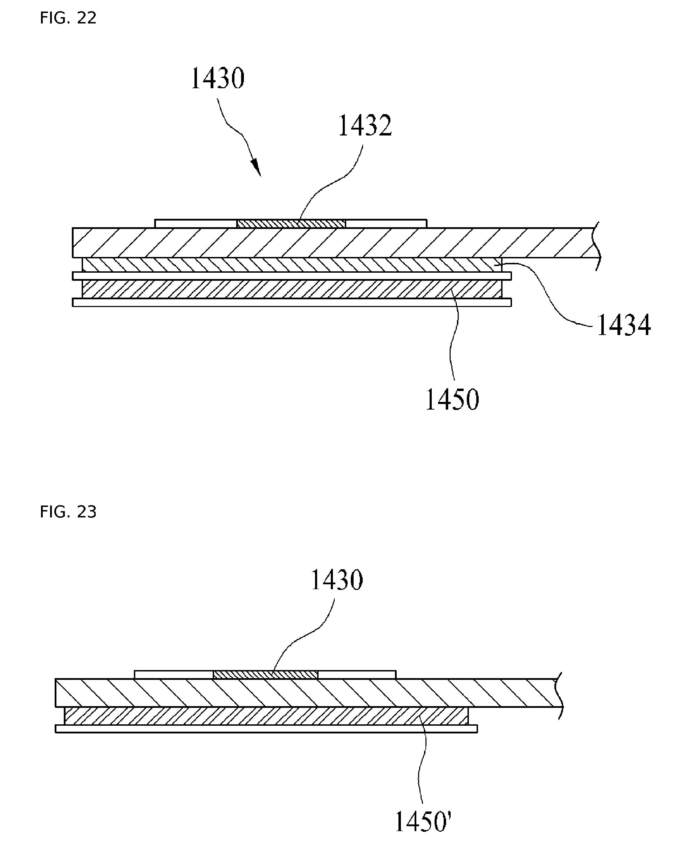

FIGS. 22 and 23 are sectional views to describe a shield layer provided in a pointing device according to one embodiment of the present invention.

Referring to FIGS. 22 and 23, the proximity sensor 1430 of FIG. 22 may further include a shield layer 1450. An optical clean adhesive (OCA) and an insulation layer are disposed under the lower electrode layer 1434. A conductive material may be coated or a film may be disposed under the film. The shield layer 1450 can cut off noise generated from lower parts and enhance the sensitivity of the signal using the proximity sensor 1430, with reducing an error of signal sensing. In case of using the shield layer 1450, a stable signal value can be generated and the finger of the user's hand wearing a mitten can be detected.

Referring to FIG. 23, even in case the proximity sensor 1430 includes no lower electrode layer 1434, a shield layer 1450' may be further provided in a lower portion of the proximity sensor 1430. The shield layer 1450' may be formed in the reverse surface of the proximity sensor with respect to the substrate and a protection layer may be further formed on a back side of the shield layer. The shield layer 1450' also can generate a stable signal value.

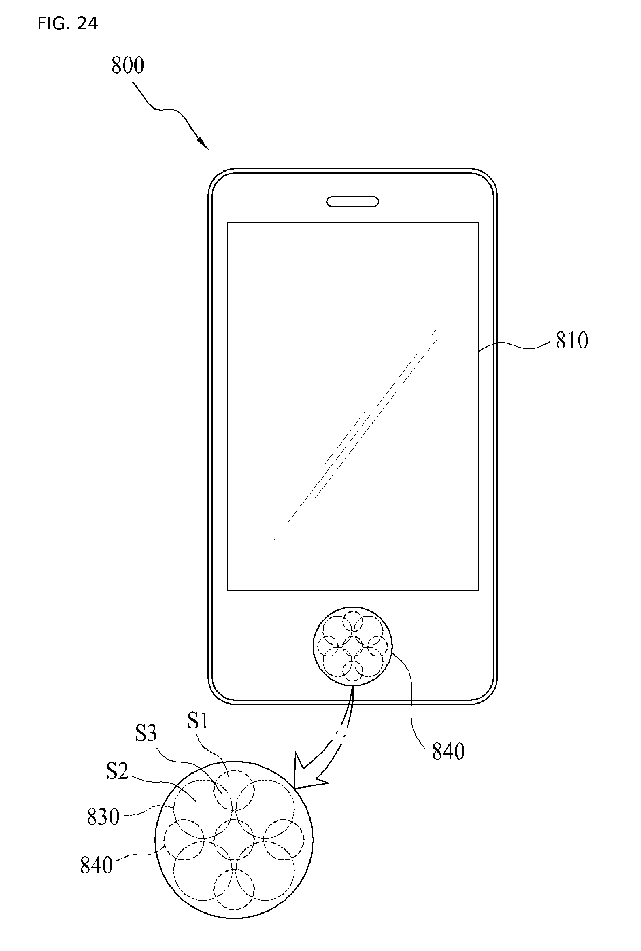

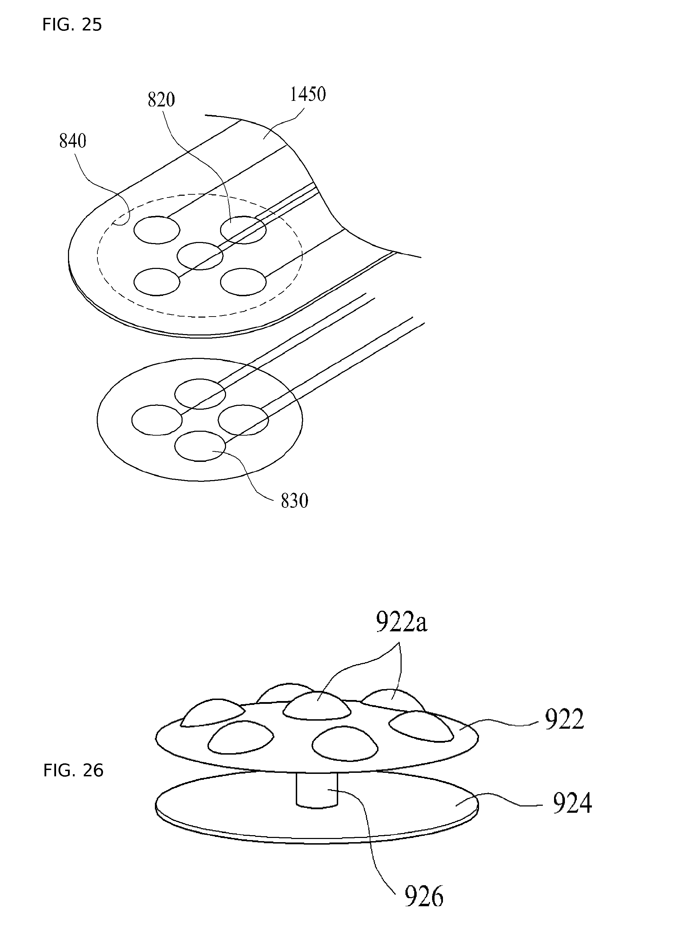

FIG. 24 is a front view of a personal hand-carry terminal to which the movement sensing device according to another embodiment of the present invention is applied. FIG. 25 is an exploded perspective view schematically illustrating the flexible printed circuit board according to another embodiment of the present invention.

Referring to FIGS. 24 and 25, the movement sensing device according to this embodiment may be applied to various electronic appliances. Specifically, a personal hand-carry terminal 800 to which the movement sensing device is applied will be described as follows.

A touch region 840 of the movement sensing device according to this embodiment may be formed in the other region except a display unit 810 of the personal hand-carry terminal 800. Accordingly, it is preferred according to the trend of reducing the size of the personal hand-carry terminal 800 and enlarging the display unit that the touch region 840 is formed small.

Specifically, the touch region according to this embodiment may be formed under the display unit 810, with a larger area than the finger so as to sense movement of the finger. As mentioned in the embodiments, the touch region 840 may be realized together with a dome switch type button for operating the personal hand-carry terminal 800.

The movement sensing device according to this embodiment may include a plurality of first sensors arranged on a first surface adjacent to the touch region 840 to measure an electrical scalar based on the position of the object, and a plurality of second sensors arranged on a second surface adjacent to the touch region 840 to measure an electrical scalar based on the position of the object on the touch region.

The first and second sensors 820 and 830 may be arranged on the first surface and the second surface that form different planes outside the touch region 840, respectively,

Especially, in case the touch region and the first and second surfaces are arranged in a vertical direction, with facing each other, the area where the sensor is formed to sense the movement of the finger can be enlarged in the limited area of the touch region 840.

When the sensor is provided under the touch region 840, the electrical scalar amount may be changed according to areas of the sensors where the object is positioned and the signal generated according to the movement of the object can be sensed.

At this time, when the touch region 840 is formed with a predetermined side larger than the size of the user's finger as mentioned above, the area of the sensor has to be enlarged or the number of the senses has to be increased to secure the area of one plane surface on the limited touch region 840 as much as possible.

However, the limited touch region 840, especially, the touch region 840 has the larger size than the size of the user's finger, with the area occupied by the sensors being enlarged, there might be a disadvantage of a deteriorated sensitivity for the difference between electrical scalar amount with respect to the movement of the object.

Accordingly, the first sensor 820 and the second sensor 830 are arranged on the first and second surfaces different from each other, so as to maximize the movement-sensing portion of each surface and to distinguish the sensing portion from non-sensing portions properly to improve the sensitivity of the sensors.

The first sensor 820 arranged on the first surface and the second sensor 830 arranged on the second surface may be arranged for the areas thereof occupying on the surfaces not to be overlapped with each other. In this instance, a non-sensing area is sufficiently formed between the sensors arranged on the surfaces. Accordingly, there may be an advantage of enlarged sensing area that senses the movement of the object, with improving the sensitivity of the sensors.

Optionally, the areas of the first and second surfaces occupied by the first and second sensors 820 and 830 may be partially overlapped with each other on the touch region 840.

In this instance, as shown in FIG. 24, the area occupied by the sensors on the touch region 840 may be divided into a portion (S1) occupied by the first sensor, another portion (S2) occupied by the second sensor and the other portion (S3) occupied by both of the first and second sensors. The electrical scalar amounts received according to the movement of the object are compared and there may be an advantage of precise sensing the operations according to the movement of the object.

The first surface and the second surface may be different PCB surfaces. Alternatively, they may be a top layer and an inner or a lower layer possessed by one PCB.

FIG. 26 is a perspective view illustrating the movement sensing device according to another embodiment of the present invention. Referring to FIG. 26, the movement sensing device according to this embodiment includes a conductor 922 disposed under the touch region, a touch terminal 924 configured to receive an electrical scalar according to movement of the object on a touch region, and a connecting material 926 configured to connect the conductor 922 and the touch terminal 924 with each other.

In case a flat type touch terminal is provided, a sensing area can be enlarged. Especially, in the movement sensing device including the touch region independent from a display unit, with a limited area according to this embodiment, the cross section of the sensing area can be enlarged in the limited touch region such that more precise electrical scalars with respect to the movement of the object can be gained advantageously.

The conductor 922 may be formed in a variety of curved-shapes capable of enlarging the cross sectional area, compared with the plane surface. Specifically, according to this embodiment, an entire portion of the conductor 922 may be formed of a curve having a radius of curvature toward a top or a bottom thereof to enlarge the cross section area.

A recess 922a may be formed to enlarge the cross section area of the flat type conductor. In other words, the cross section area where the movement of the object can be sensed may be enlarged by a plurality of recesses 922a recessed upward or downward such that more precise electrical scalars can be gained according to the movement of the object.

Meanwhile, as shown in FIG. 26, an embossing-shaped recess 922a may be formed in the curved conductor 922 and the sensing area can be maximized.

**[0160]** [00161] Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

**Claims**

1. A movement sensing device configured to detect movement of an object on a touch region, the movement sensing device comprising:

three or more proximity sensors arranged on one surface adjacent to the touch region independently and two-dimensionally, to measure electrical scalars corresponding to distances with the object on the touch region, respectively; and

a control unit configured to calculate a vector of a second touch point relatively changed with respect to a first touch point based on a first electrical scalar and a second electrical scalar measured at a predetermined time difference,

wherein a relative moving signal with respect to a reference point is generated by calculating the movement of the object as the vector.

2. The movement sensing device according to claim 1, wherein the proximity sensor are provided in a circular, linear or polygonal shape or a fan shape.

3. The movement sensing device according to claim 2, further comprising:

a scroll sensor arranged linearly arranged between the proximity sensors,
wherein the scroll sensor is applied to linear movement of the object approaching and
passing the scroll sensor, prior to the proximity sensors.

4. The movement sensing device according to claim 2, wherein the proximity sensor senses movement of the object within the touch region, movement of the object passing a boundary of the touch region, movement of the object along the boundary of the touch region or touch of the object on the boundary of the touch region, and the proximity sensor defines an independent command with respect to at least one of the movements and touch.

5. The movement sensing device according to claim 4, further comprising:

a boundary electrode provided along the boundary of the touch region,
wherein movement of the object within the touch region, movement of the object passing a boundary of the touch region, movement of the object along the boundary of the touch region or touch of the object on the boundary of the touch region is sensed according to presence of a signal sensed by the boundary electrode.

6. The movement sensing device according to claim 1, further comprising:

a touch sensor arranged in a center of the proximity sensors,
wherein the touch sensor calculates the vector, when the object touches the touch sensor.

7. The movement sensing device according to claim 1, wherein a pointer or screen on a display mounted on the movement sensing device is moved based on the calculated relative vector with respect to the reference point.

8. The movement sensing device according to claim 1, wherein a plurality of touch regions are provide and each of the touch regions implements a corresponding function distinguished from the functions of the others.

9. The movement sensing device according to claim 1, wherein the proximity sensor comprises,
a plurality of direction electrodes; and
a ground electrode configured to electrically cut off a connection line between neighboring direction electrodes adjacent to a predetermined one of the direction electrodes in which the sensing of the object is implemented.

10. The movement sensing device according to claim 9, wherein the ground electrode is provided between the direction electrodes in a flat structure.

11. The movement sensing device according to claim 9, wherein the ground electrode comprises a via-hole to pass the connection line of the direction electrodes there through, with positioned under the direction electrodes, and the connection line of the direction electrodes is arranged under the ground electrode via the via-hole.

12. The movement sensing device according to claim 1, further comprising:

a shield layer formed by coating a conductive material under the proximity sensor.

13. A method of sensing movement of an object on a touch region comprising steps of:

measuring first and second electrical scalars at a predetermined time different,
corresponding to first and second touch points of the object, respectively; and
calculating a vector of the second touch point relatively changed with respect to the first touch point,
wherein the steps are performed by using three or more proximity sensors arranged on one surface adjacent to the touch region independently and two-dimensionally, to measure electrical scalars corresponding to distances with the object on the touch region, respectively.

14. The method of sensing the movement of the object on the touch region according to claim 13, further comprising:

a scroll sensor arranged linearly arranged between the proximity sensors,
wherein the scroll sensor is applied to linear movement of the object approaching and
passing the scroll sensor, prior to the proximity sensors.

15. The method of sensing the movement of the object on the touch region according to claim 13, wherein the proximity sensor senses movement of the object within the touch region, movement of the object passing a boundary of the touch region, movement of the object along the boundary of the touch region or touch of the object on the boundary of the touch region, and
the proximity sensor defines an independent command with respect to at least one of the movements and touch.

16. The method of sensing the movement of the object on the touch region according to claim 15, further comprising:

a boundary electrode provided along the boundary of the touch region,
wherein movement of the object within the touch region, movement of the object passing a boundary of the touch region, movement of the object along the boundary of the touch region or touch of the object on the boundary of the touch region is sensed according to presence of a signal sensed by the boundary electrode.

17. The method of sensing the movement of the object on the touch region according to claim 13, further comprising:

a touch sensor arranged in a center of the proximity sensors,
wherein the touch sensor calculates the vector, when the object touches the touch sensor.

18. The movement sensing device according to claim 13, wherein a pointer or screen on a display mounted on the movement sensing device is moved based on the calculated relative vector with respect to the reference point.

FIG. 1

FIG. 2

FIG. 3

EP 2 613 230 A2

FIG. 4

18

FIG. 5

FIG. 6

300

310

320

FIG. 7

400

410

420

FIG. 8

FIG. 9

FIG. 10

520

530

FIG. 11

520

530

FIG. 12

FIG. 13

600

610

620

OK

670

640   615   645

FIG. 14

640        645

FIG. 15

700

710

720    740

FIG. 16

FIG. 17

FIG. 18

FIG. 19

FIG. 20

FIG. 21

1450

1432
1434
} 1430

FIG. 22

1430

1432

1434

1450

FIG. 23

1430

1450'

FIG. 24

800

810

840

S3
S1
S2
830
840

FIG. 25

FIG. 26